# EUROPÄISCHE PATENTSCHRIFT

(11) **EP 3 153 272 B1**
(45) Veröffentlichungstag und Bekanntmachung des Hinweises auf die Patenterteilung: **17.06.2020**
(21) Anmeldenummer: 16185136.5
(22) Anmeldetag: 22.08.2016
(51) Int. Cl.: B23K 11/14, B23K 11/25, B23K 11/31

(54) **SCHWEISSEINRICHTUNG ZUM WIDERSTANDSBUCKELSCHWEISSEN**
WELDING DEVICE FOR RESISTANCE PROJECTION WELDING
DISPOSITIF DE SOUDAGE DESTINE AU SOUDAGE PAR RESISTANCE PAR BOSSAGE

(30) Priorität: 05.10.2015 DE 202015105249 U
(43) Veröffentlichungstag der Anmeldung: 12.04.2017
(73) Patentinhaber: DALEX-Schweißmaschinen GmbH & Co. KG, 57537 Wissen/Sieg (DE)
(72) Erfinder: Mayinger, Friedrich, 57539 Roth (DE)
(74) Vertreter: Rausch Wanischeck-Bergmann Brinkmann

(56) Entgegenhaltungen:
- EP-A1- 0 640 428
- DE-A1-102012 112 547
- JP-A- H09 155 558
- JP-A- H11 320 106

## Beschreibung

Die Erfindung betrifft eine Schweißeinrichtung zum Widerstandsbuckelschweißen, mit zwei Elektrodenhaltern, die jeweils der Aufnahme einer mit einem elektrischen Schweißstrom beaufschlagbaren Schweißelektrode dienen, wobei einer der beiden Elektrodenhalter linear verfahrbar ausgebildet und unter Kraftbeaufschlagung von zwischen den Schweißelektroden angeordneten und zu verschweißenden Bauteilen mit einer in Schließrichtung wirkende Kraft beaufschlagbar ist.

Das Widerstandsbuckelschweißen im Allgemeinen sowie Schweißeinrichtungen zum Widerstandsbuckelschweißen im Speziellen sind aus dem Stand der Technik an sich gut bekannt, weshalb es eines gesonderten druckschriftlichen Nachweises an dieser Stelle nicht bedarf.

Beim Widerstandsbuckelschweißen erfolgt das Verbinden zweier Bauteile durch mittels stromerzeugter Wärme einerseits bei gleichzeitiger Kraftbeaufschlagung zur Druckerzeugung andererseits. Dabei entsteht die Schweißwärme in Abhängigkeit des angelegten Schweißstroms, des Widerstands an den Berührungsstellen sowie des durch die Bauteile bereitgestellten ohmschen Widerstands. Die Besonderheit des Buckelschweißens besteht darin, dass der Schweißstrom auf einige, durch vorgeformte Berührungsstellen, die sogenannten Buckel, vorgegebenen Stromübergänge konzentriert wird, an denen die Erwärmung und die Schweißung stattfindet. Derartige Buckel können beispielsweise Rundbuckel, Langbuckel oder Ringbuckel sein.

Schweißeinrichtungen zum Widerstandsbuckelschweißen verfügen zwecks Kraftbeaufschlagung der miteinander zu verschweißenden Bauteile über wenigstens einen linear verfahrbaren Elektrodenhalter. Im Schweißfall fährt der Elektrodenhalter die von ihm getragene Schweißelektrode an die Schweißstelle heran, erzeugt die für die Schweißung erforderliche Kraftbeaufschlagung und setzt nach einem bestimmungsgemäßen Abschmelzen des Buckels nach. Um ein solches Verfahren des Elektrodenhalters realisieren zu können, sind aus dem Stand der Technik unterschiedliche Antriebskonzepte bekannt geworden. Dabei kann gemäß einem vorbekannten Antriebskonzept ein Linearmotor zum Einsatz kommen.

Aus der DE 10 2011 113 403 B3 ist eine Nachführeinrichtung für einen Elektrodenhalter bekannt geworden, die über einen Linearantrieb in Form mehrerer Pneumatikzylinder verfügt. Dabei besteht die Besonderheit der vorbekannten Nachführeinrichtung darin, dass zwei in Bewegungsrichtung hintereinandergeschaltete Pneumatikzylinder vorgesehen sind. Im bestimmungsgemäßen Verwendungsfall fährt der erste Pneumatikzylinder aus und drückt damit die Schweißelektrode mit einer ersten Druckkraft gegen die zu verschweißenden Werkstücke. Sobald es zu einer Bestromung der Elektrode kommt, wird der zweite Pneumatikzylinder druckbeaufschlagt, was zu einer Druckbeaufschlagung mit einer zweiten Druckkraft führt. Gemäß dieser vorgeschlagenen Nachführeinrichtung wird also antriebstechnisch unterschieden zwischen einer Zustellbewegung und einem Nachrücken der Schweißelektrode bei zunehmendem Abschmelzen des Schweißbuckels.

Eine ähnliche Zweiteilung der Zustellbewegung ist aus der DE 10 2011 056 717 A1 bekannt. Gemäß der hier beschriebenen Schweißeinrichtung kommt zum Verfahren des Elektrodenhalters ein nicht näher beschriebener Linearantrieb einerseits sowie ein Elektromagnet andererseits zum Einsatz. Dabei dient der Linearantrieb dazu, den Elektrodenhalter beziehungsweise die von dem Elektrodenhalter getragene Schweißelektrode an die Schweißstelle heranzufahren, wobei dann die für die Schweißung notwendige Kraftbeaufschlagung nicht mehr durch den Linearantrieb, sondern durch den Elektromagneten erfolgt. Diese Unterteilung zwischen Verfahrbewegung einerseits und Kraftbeaufschlagung andererseits erbringt den Vorteil, dass eine optimierte Konfiguration des Linearantriebes hinsichtlich der von ihm zu bewerkstelligenden Verfahrbewegung und des Elektromagneten hinsichtlich der von ihm zu bewerkstelligenden Kraftbeaufschlagung möglich ist.

Eine Weiterentwicklung der aus der DE 10 2011 056 717 A1 bekannten Konstruktion ist mit der DE 10 2012 112 547 A1 offenbart. Anders als bei der Konstruktion nach der DE 10 2011 056 717 A1 kommt bei der Konstruktion nach der DE 10 2012 112 547 A1 zum Verfahren des Elektrodenhalters ein nicht näher beschriebener Linearantrieb einerseits sowie ein Elektromagnet zwecks Kraftbeaufschlagung andererseits zum Einsatz. Dabei besteht die Besonderheit nach der Konstruktion gemäß der DE 10 2012 112 547 A1 darin, dass die im bestimmungsgemäßen Verwendungsfall vom Elektromagneten erzeugte Kraftbeaufschlagung unabhängig vom anliegenden Schweißstrom erzeugt und geregelt wird. Zu diesem Zweck wird jeweils ein akuteller Istwert der Schweißkraft ermittelt und mit einem vorgegebenen Sollwert verglichen, wobei die Schweißkraft durch geregelte Ansteuerung des Elektromagneten auf den Sollwert eingeregelt wird.

Obgleich sich die vorbeschriebenen Antriebskonzepte im alltäglichen Praxiseinsatz bewährt haben, besteht Verbesserungsbedarf.

Ein grundlegendes Problem beim Widerstandsbuckelschweißen besteht darin, dass einerseits eine hinreichende Kraftbeaufschlagung zu besorgen und andererseits eine exakte Nachführbewegung zu gewährleisten ist. Ist beispielsweise die Kraftbeaufschlagung zu Beginn eines Schweißvorgangs zu hoch, so kommt es zu einem Ein- oder Plattdrücken des Schweißbuckels, was zu einer unter Umständen unvollständigen Schweißung führt. Andererseits muss im Falle eines bestimmungsgemäßen Abschmelzen des Schweißbuckels unter entsprechender Kraftbeaufschlagung ein möglichst zeitunverzögertes Nachrücken der Schweißelektrode sichergestellt werden, weil es ansonsten zu ungewollten Schweißspritzungen kommt.

Ausgehend vom Vorbeschriebenen ist es die **Aufgabe** der Erfindung, eine Schweißeinrichtung der eingangs genannten Art dahingehend weiter zu entwickeln, dass den an sich widerstreitenden Interessen der Kraftbeaufschlagung und der Nachrückbewegung in verbesserter Weise Rechnung getragen ist.

Zur **Lösung** dieser Aufgabe wird mit der Erfindung eine Schweißeinrichtung zum Widerstandsbuckelschweißen der eingangs genannten Art vorgeschlagen, die sich dadurch auszeichnet, dass zur Verfahrbewegung sowie zur Kraftbeaufschlagung des einen Elektrodenhalters ausschließlich ein Linearantrieb vorgesehen ist, wobei der Linearantrieb ein magnetischer Linearantrieb ist, der kraftgesteuert ist, wobei als Maß für die auf die zu verschweißenden Bauteile einwirkende Kraftbeaufschlagung der am Linearantrieb anliegende und hinsichtlich Stromstärke und/oder Spannung vorgebbare Strom dient, wobei im Falle einer Unterschreitung der vorgebbaren Stromstärke und/oder Spannung eine Stromzuschaltung zur Erzielung einer vorgebbaren Schweißkraft erfolgt.

In Abkehr zum Stand der Technik sieht die erfindungsgemäße Schweißeinrichtung ausschließlich einen Linearantrieb vor, der die Verfahrbewegung, die Kraftbeaufschlagung sowie das Nachsetzen besorgt. Dabei kommt als Linearantrieb ein magnetischer Linearantrieb zum Einsatz.

Die erfindungsgemäße Ausgestaltung erweist sich im Aufbau als besonders einfach. Dies deshalb, weil im Unterschied zum Stand der Technik nicht unterschiedliche Antriebe miteinander kombiniert und in Reihe geschaltet angeordnet sind. Diese Vereinfachung ist aufgrund des eingesetzten magnetischen Linearantriebes möglich. Dieser gestattet es, quasi ohne Reaktionszeit zuzustellen, womit es insbesondere gestattet ist, mit Abschmelzbeginn der Buckel nachzusetzen, so dass unerwünschte Schweißspritzer vermieden sind.

Der erfindungsgemäß als magnetischer Linearantrieb ausgebildete Linearantrieb lässt eine kraftabhängige Steuerung zu. Die Kraftsteuerung des Linearantriebs gestattet es, eine solche Kraftbeaufschlagung vorzusehen, dass insbesondere eine zu hohe Druckausgestaltung mit dem Ergebnis ein- oder plattgedrückter Buckel unterbleibt. Es ist insofern konstruktiv sichergestellt, dass ein Kraftbeaufschlagung der Schweißstelle in einer solchen Art erfolgt, dass ohne kraftinduzierte Buckelverformung eine Stromeinleitung in die zu verschweißenden Bauteile möglich ist, und dies bei optimierter Druckbeaufschlagung. Sobald die durch die Buckel bereitgestellten Schweißstellen infolge der Strom- und Druckeinwirkung abschmelzen, erfolgt zwecks Beibehaltung einer gewünschten Kraftbeaufschlagung ein Nachrücken, wobei dieses Nachrücken quasi ohne nachteilige Zeitverzögerung erfolgt.

Als Maß für die auf die zu verschweißenden Bauteile einwirkende Kraftbeaufschlagung dient der am Linearantrieb anliegende Strom, der hinsichtlich Stromstärke und/oder Spannung vorgebbar ist, insbesondere unter Berücksichtigung der zu verschweißenden Buckelgeometrie. Mit Beginn eines Schweißvorgangs wird der linear verfahrbare Elektrodenhalter mittels des Linearantriebs zur Kontaktierung der Schweißstelle verfahren. In Abhängigkeit der voreingestellten Stromstärke und/oder Spannung ergibt sich infolge dieser Zustellbewegung eine Kraftbeaufschlagung der Schweißstelle. Es wird nun der Schweißstrom eingeschaltet, was nach Ablauf einer gewissen Schweißzeit von zum Beispiel zirka 200 ms zu einem Teigigwerden der zu verschweißenden Bauteile an der Schweißstelle führt. Das zu verschweißende Material gibt infolgedessen nach, womit sich die auf die verfahrbare Elektrode wirkende Gegenkraft reduziert. Dies wird vorrichtungsseitig als der Beginn eines Abschmelzens der Buckel detektiert. Vorrichtungsbeziehungsweise verfahrensseitig kommt es alsdann zum Nachsteuern, wobei eine Stromzuschaltung hinsichtlich des am Linearantrieb anliegenden Stroms zur Erzielung einer vor Beginn der Schweißung vorgebbaren Schweißkraft erfolgt. Es erfolgt mithin nach einem Nachsetzen ohne nennenswerte Reaktionszeit eine Erhöhung der Kraftbeaufschlagung und zwar auf die für eine optimierte Schweißung benötigte Schweißkraft.

Bei aus dem Stand der Technik vorbekannten Systemen erfolgt zu Beginn der Schweißung eine Kraftbeaufschlagung mit einer solchen Kraft, dass nach einem durch die Buckelabschmelzung bedingten Nachrücken noch eine solche Kraft anliegt, die für die Durchführung eines Schweißvorgangs hinreichend ist. Eine solche Kraftbeaufschlagung zu Beginn des Schweißvorgangs birgt aber den Nachteil in sich, dass es bereits im Vorfeld einer Buckelschmelzung zu einer Buckelverformung kommen kann, so dass eine nicht mehr optimierte Schweißstellenausbildung gewährleistet ist. Wird die anfängliche Kraftbeaufschlagung zur Vermeidung dieses Problems zu gering gewählt, ist die während des eigentlichen Schweißvorgangs anliegende Schweißkraft nicht mehr groß genug, so dass es in nachteiliger Weise zu Schweißspritzungen kommen kann.

Mit der erfindungsgemäßen Vorrichtung beziehungsweise dem erfindungsgemäßen Verfahren wird hier Abhilfe gestellt, denn erfolgt mit Beginn einer Schweißung eine Kraftbeaufschlagung, die zu niedrig ist, um eine Buckelverformung bewerkstelligen zu können. Sobald es dann durch Teigigwerden des Materials zu einem Nachgeben der zu verschweißenden Bauteile kommt, führt die Vorrichtung nach und steigert zudem die Kraftbeaufschlagung auf die wünschenswerterweise zu erzielende Schweißkraft. Damit ist sichergestellt, dass die eigentliche Schweißung bei optimiert anliegender Schweißkraft erfolgt, so dass auch ein optimiertes Schweißergebnis ohne etwaige Schweißspritzer erreicht werden kann.

Die erfindungsgemäße Konstruktion ist im Aufbau vergleichsweise einfach und gestattet eine optimierte Kraftbeaufschlagung des Elektrodenhalters sowohl zum Nachrücken als auch zur Druckausübung auf die mit zueinander verschweißenden Bauteile. Dabei zeichnet sich der magnetische Linearantrieb durch eine vergleichsweise kurze Ansprechzeit aus, so dass das Nachrücken des Elektrodenhalters derart schnell erfolgen kann, dass es zu keinen unerwünschten Schwankungen im Stromfluss oder der Druckbeaufschlagung infolge zeitverzögerter Zustellbewegungen kommt.

Es ist gemäß der Erfindung vorgesehen, dass der Linearantrieb einen verfahrbar zwischen zwei Spulenanordnungen angeordneten Anker aufweist.

Die Spulenanordnungen verfügen bevorzugterweise über einen Jochkörper, der eine ringförmige Ausnehmung aufweist, in die eine Spule eingesetzt ist. Im endmontierten Zustand ist der Anker unter Belassung eines Luftspalts zwischen den beiden Jochkörpern angeordnet, wobei die von den Jochkörpern getragenen Spulen dem Anker zugewandt sind. Im Betriebsfall wird zumindest eine der Spulen mit Strom beaufschlagt, was zu einem magnetischen Fluss quer zur Längserstreckung des Ankers führt.

Der Linearantrieb ist gemäß einem weiteren Merkmal der Erfindung mittels einer Regelungseinrichtung weggesteuert. Zu diesem Zweck misst die Regelungseinrichtung mit einer Messeinrichtung den Verfahrweg des linear verfahrbar ausgebildeten Elektrodenhalters und/oder des Ankers und vergleicht mit ihrer Vergleichsschaltung den erfassten Messwert mit einem vorgebbaren Weg-Vergleichswert, wobei im Falle der Gleichheit von Messwert und Weg-Vergleichswert die Verfahrbewegung endet.

Gemäß dieser Ausführungsform kann mittels der Regelungseinrichtung eine Wegsteuerung stattfinden. Dank des erfindungsgemäß vorgesehenen magnetischen Linearantriebes kann eine Wegsteuerung µm-genau durchgeführt werden. Die Wegsteuerung wird insbesondere genutzt, um eine exakte Zustellung des Elektrodenhalters und damit der davon getragenen Schweißelektrode an die Schweißstelle zu bewerkstelligen.

Gemäß dieser bevorzugten Ausführungsform der Erfindung ist es möglich, eine exakte Positionsangabe hinsichtlich der Stellung des Elektrodenhalters beziehungsweise der davon getragenen Schweißelektrode zu ermöglichen. Insoweit gestattet es die erfindungsgemäße Vorrichtung, dass der Elektrodenhalter und/oder der Anker für eine Zuführung der vom Elektrodenhalter getragenen Schweißelektrode zur Schweißstelle zunächst weggesteuert zugestellt wird. Dabei erfolgt dank des vorgesehenen Messsystems eine µm-genaue Zustellung. Sobald die gewünschte Lage des Elektrodenhalters beziehungsweise der davon getragenen Schweißelektrode in Relation zu den zu verschweißenden Bauteilen erreicht ist, erfolgt eine automatische Umschaltung auf die Kraftsteuerung. Die Kraftsteuerung wird dann in der schon vorbeschriebenen Weise zur Schweißdurchführung genutzt.

Die Umschaltung von Wegsteuerung auf Kraftsteuerung im Moment des Schweißens erbringt den großen Vorteil, dass eine Krafteinstellung in Abhängigkeit des anliegenden Stroms erfolgen kann. Dabei wird die Kraftbeaufschlagung dynamisch an die tatsächlich anliegende Bestromung eingestellt. So ist es insbesondere möglich, den zu Beginn einer Schweißung rampenförmig zunehmenden Stromfluss durch eine zu Beginn der Schweißung größere Kraftbeaufschlagung zu steuern. Sobald dann der volle Schweißstrom anliegt, kann über die Regelungseinrichtung eine verminderte Kraftbeaufschlagung eingestellt werden. Die Kraftsteuerung gestattet es insoweit, eine optimierte Anpassung der Kraftbeaufschlagung an den tatsächlich anliegenden Schweißstrom vorzusehen. Mit herkömmlichen und aus dem Stand der Technik vorbekannten Zustellsystemen, wie zum Beispiel Servo-Motoren oder Pneumatik-Zylindern ist dies nicht möglich, da das Ansprechverhalten derartiger Antriebssysteme viel zu träge ist. Der erfindungsgemäß vorgesehene magnetische Linearantrieb schafft hier Abhilfe, der zum einen umschaltbar eine Wegsteuerung einerseits sowie eine Kraftsteuerung andererseits ermöglicht und zudem im Ansprechverhalten wenig träge ist, so dass eine derart schnelle Zustellbewegung möglich ist, dass in Abhängigkeit des tatsächlich anliegenden Schweißstroms eine für eine optimierte Schweißung notwendige Kraftbeaufschlagung besorgt werden kann.

Der Anker ist gemäß der Erfindung plattenförmig ausgebildet. Die Spulenanordnungen stellen jeweils dementsprechend eine dem Anker zugewandte flächenhafte Ausgestaltung zur Verfügung, so dass insgesamt ein unter Belassung eines Luftspalts quasi flächiges Zueinanderliegen von Primärseite und Sekundärseite erreicht ist.

Der Anker weist gemäß einem weiteren Merkmal der Erfindung eine Kunststoffplatte und einen daran angeordneten magnetisch aktiven Teil aus einem dauermagnetischen Werkstoff auf. Dabei ist im Betriebsfall die Wechselwirkung des magnetisch aktiven Teil des Ankers mit dem durch die Spulen bewirkten magnetischen Fluss für eine Vorwärtsbewegung des Ankers in Ankerlängserstreckung verantwortlich. Der Anker kann alternativ auch vollständig aus einem magnetisch aktiven Teil gebildet sein.

Der Anker ist gemäß einem weiteren Merkmal der Erfindung mit einem Schaltmittel ausgerüstet, des mit einem Unterbrechungsschalter zusammenwirkt. Ein unerwünschtes zu weites Verfahren des Ankers relativ gegenüber den Spulenanordnungen ist so unterbunden. Denn mit Erreichen einer Endposition wird die Schaltung des Unterbrechungsschalters bewirkt, was zu einer Stromlosstellung der Spulen und damit zu einer Beendigung der Verfahrbewegung des Ankers führt.

Es ist gemäß einem weiteren Merkmal der Erfindung vorgesehen, dass der verfahrbar ausgebildete Elektrodenhalter mit einem Kraftsensor und/oder einem Wegsensor ausgerüstet ist. Der Kraftsensor steht ebenso wie der Wegsensor in kommunikationstechnischer Verbindung mit der Messeinrichtung der Regelungseinrichtung, wobei der Kraftsensor im Betriebsfall die auf die miteinander zu verschweißenden Bauteile einwirkende Kraftbeaufschlagung und der Wegsensor den Verfahrweg von Elektrodenhalter und/oder Anker detektiert. Der Kraftsensor und der Wegsensor können auch an anderer Stelle positioniert sein. Es kann auch ein kombinierter Kraft-Wegsensor vorgesehen sein.

Gemäß einem weiteren Merkmal der Erfindung ist vorgesehen, dass die Schweißkraft in Abhängigkeit der Buckelgeometrie vorgebbar ist. Unter anderem die Buckelgeometrie ist maßgeblich für die im Betriebsfall durch den Linearantrieb aufzubringende Kraftbeaufschlagung. Es ist deshalb erfindungsgemäß vorgesehen, die vorgebbare Schweißkraft in Abhängigkeit der Buckelgeometrie festzulegen. Dies kann bevorzugterweise automatisiert erfolgen, zu welchem Zweck die erfindungsgemäße Schweißeinrichtung über eine Auswerteeinheit verfügt, die die Buckelgeometrie automatisiert erfasst. Die Auswerteinheit kann zu diesem Zweck über eine optische Erfassungseinrichtung, wie zum Beispiel eine Kamera verfügen.

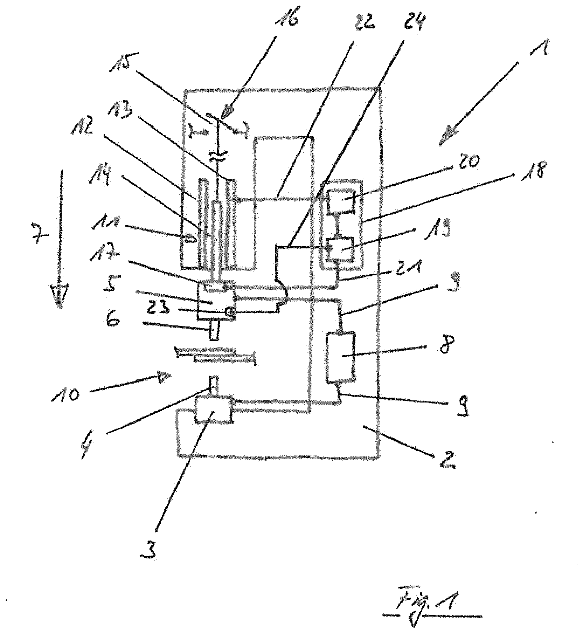

Weitere Merkmale und Vorteile der Erfindung ergeben sich aus der nachfolgenden Beschreibung anhand der einzigen Figur 1, die in rein schematischer Darstellung eine erfindungsgemäße Schweißvorrichtung zum Widerstandsbuckelschweißen zeigt.

Die erfindungsgemäße Schweißeinrichtung 1 verfügt über einen Grundkörper 2, der im gezeigten Ausführungsbeispiel c-förmig ausgebildet ist. Der Grundkörper 2 trägt einen ersten Elektrodenhalter 3 sowie einen zweiten Elektrodenhalter 5, wobei die Elektrodenhalter 3 und 5 jeweils der Aufnahme einer mit einem elektrischen Schweißstrom beaufschlagbaren Schweißelektrode 4 beziehungsweise 6 dienen. Zum Zwecke der Schweißstrombeaufschlagung sind die Schweißelektroden 4 und 6 in an sich bekannter Weise mittels entsprechender Stromleitungen 9 an einen Transformator 8 angeschlossen.

Der Elektrodenhalter 3 ist im gezeigten Ausführungsbeispiel ortsfest am Grundkörper 2 montiert. Der Elektrodenhalter 5 ist indes linear verfahrbar zum Grundkörper 2 ausgebildet, zu welchem Zweck der Elektrodenhalter 5 an einen Linearantrieb 11 angeschlossen ist.

Der Linearantrieb 11 ist ein magnetischer Linearantrieb, der über zwei Spulenanordnungen 12 und 13 sowie einen Anker 14 verfügt, wobei der Anker 14 unter Belassung eines Luftspalts zwischen den beiden Spulenanordnungen 12 und 13 angeordnet ist. Der Luftspalt beträgt zwischen 1,0 mm und 1,5 mm, vorzugsweise 1,2 mm oder 1,3 mm.

Der Anker 14 ist plattenförmig ausgebildet ebenso wie die Spulenanordnung 12, 13, so dass die Primär- und Sekundärseiten unter Belassung des Luftspalts quasi flächig zueinander stehen. Einendseitig ist der Anker 14 mit einem Schaltmittel 15 in Form einer Stange ausgerüstet, die mit einem Schalter 16 zusammenwirkt. Bei einem zu weiten Verfahren des Ankers 14 entgegen der Schließrichtung 7, das heißt mit Bezug auf die Zeichnungsebene nach Fig. 1 nach oben drückt das Schaltmittel 15 gegen den Schalter 16, womit dieser betätigt wird, was zu einer sofortigen Stilllegung des Linearantriebs 11 führt.

Die erfindungsgemäße Schweißeinrichtung 1 verfügt desweiteren über eine Regelungseinrichtung 18, die ihrerseits eine Messeinrichtung 19 sowie eine Vergleichsschaltung 20 zur Verfügung stellt. Über eine kommunikationstechnische Verbindung 21 ist an die Messeinrichtung 19 ein Kraftsensor 17 angeschlossen, der im gezeigten Ausführungsbeispiel am Elektrodenhalter 5 angeordnet ist. Die Messeinrichtung 19 ist ferner über eine kommunikationstechnische Verbindung 24 an einen Wegsensor 23 angeschlossen, wobei der Wegsensor 23 im gezeigten Ausführungsbeispiel ebenfalls am Elektrodenhalter 5 angeordnet ist. Ferner steht die Vergleichsschaltung 20 in kommunikationstechnischer Verbindung 22 mit dem Linearantrieb 11.

Wie sich aus der vorbeschriebenen Konstruktion ergibt, verfügt die erfindungsgemäße Schweißeinrichtung 1 nur über einen Linearantrieb 11. Es wird ausschließlich über diesen Linearantrieb 11 eine Verfahrbewegung zur Kontaktierung der Schweißelektroden 4 und 6 mit den zu verschweißenden Bauteilen 10, eine Kraftbeaufschlagung der miteinander zu verschweißenden Bauteile 10 sowie im Falle einer beginnenden Buckelabschmelzung ein Nachrücken der Schweißelektrode 6 realisiert. In Abkehr zum Stand der Technik werden also nicht unterschiedliche Antriebsmodule miteinander kombiniert, sondern es ist für die gesamte Zustellbewegung ausschließlich der magnetische Linearantrieb 11 vorgesehen.

Die Funktionsweise der erfindungsgemäßen Schweißeinrichtung 1 ergibt sich wie folgt:
Nach einem Positionieren der miteinander zu verschweißenden Bauteile 10 zwischen die beiden Schweißelektroden 4 und 6 erfolgt mittels des Linearantriebs 11 eine Verfahrbewegung, infolge dessen die Schweißelektroden 4 und 6 in bestimmungsgemäßen Kontakt mit den einander zu verschweißenden Bauteilen 10 gebracht werden. Zu diesem Zweck wird der linear verfahrbar ausgebildete Elektrodenhalter 5 in Schließrichtung 7, das heißt mit Bezug auf die Zeichnungsebene nach Figur 1 nach unten verfahren. Diese Verfahrbewegung wird weggesteuert durchgeführt, zu welchem Zweck mittels des Wegsensors 23 der vom Elektrodenhalter 5 zurückgelegte Verfahrweg messtechnisch erfasst wird. Die Messeinrichtung 19 gibt den erfassten Messwert an die Vergleichsschaltung 20 weiter, die den erfassten Mess-, das heißt Ist-Wert mit einem vorgebbaren Weg-Vergleichswert vergleicht. Sobald Gleichheit zwischen Ist-Wert und Vergleichswert besteht, wenn also die vorgegebene Wegstrecke vom Elektrodenhalter 5 zurückgelegt ist, wird die Verfahrbewegung gestoppt. Der Elektrodenhalter 5 befindet sich alsdann exakt in seiner vorgebbaren Position, die µm-genau angefahren ist. Sobald diese Zustellbewegung beendet ist, erfolgt eine Umschaltung von Wegsteuerung auf Kraftsteuerung.

Alsdann erfolgt eine Kraftbeaufschlagung der miteinander zu verschweißenden Bauteile 10, und zwar derart, dass eine für die anstehende Schweißung optimierte Druckbelastung, das heißt Kraftbeaufschlagung der Bauteile 10 stattfindet. Als Maß hierfür dient der am Linearantrieb 11 anliegende und hinsichtlich Stromstärke und/oder Spannung vorgebbare Strom. Kommt es nun infolge eines anliegenden Schweißstroms zu einem Teigigwerden des Materials, so gibt dieses nach, was zu einem Nachrücken des Elektrodenhalters 5 führt, wobei infolge einer verringerten Gegenkraft der am Linearantrieb anliegende Strom hinsichtlich der vorgegebenen Stromstärke und/oder Spannung unterschritten wird. Dies wird vorrichtungsseitig erkannt und nachgesteuert, indem es zu einer Stromzuschaltung zur Erzielung einer vorgebbaren Schweißkraft kommt. Dabei erfolgt die Zuschaltung des Stroms quasi reaktionszeitlos, so dass trotz Massenträgheit des Elektrodenhalters 5 ein Erreichen der gewünschten Schweißkraft innerhalb kürzester Zeit folgt, beispielsweise binnen 2 ms.

Die mittels der erfindungsgemäßen Vorrichtung realisierte Kraftsteuerung des Linearantriebs 11 gestattet es, stets eine solche Kraftbeaufschlagung vorzusehen, die einerseits ein unbeabsichtigtes Plattdrücken eines Schweißbuckels verhindert, andererseits aber auch eine solche Kraftbeaufschlagung bewerkstelligt, dass der Schweißstrom in gewünschter Form über die Schweißbuckel zwecks Erwärmung fließen kann, ohne dass es zu ungewollten Schweißspritzern infolge eines unter Umständen zu weiten Abstandes der miteinander zu verschweißenden Bauteile 10 kommt. Dabei kann zudem eine Kraftbeaufschlagung in Abhängigkeit des tatsächlich anliegenden Schweißstroms erfolgen.

Der am Elektrodenhalter 5 angeordnete Kraftsensor 17 dient als Überprüfungsmittel dazu, die tatsächlich anliegende Kraftbeaufschlagung zu detektieren. Dies gestattet eine spätere Auswertung was insbesondere aus Gründen der Qualitätsüberwachung sinnvoll sein kann.

Um zu vermeiden, dass es zur Ausbildung ungenauer Schweißstellen dadurch kommt, dass sich der Grundkörper 2 bei maximal anliegender Kraftbeaufschlagung in unerwünschter Weise verformt, wird mit der Erfindung vorgeschlagen, dass insbesondere der Teil des Grundkörpers 2, der den Linearantrieb 11 beherbergt, zusätzlich versteift ausgebildet ist, um die beim Schweißvorgang infolge der Kraftbeaufschlagung auf den Grundkörper 2 einwirkende Biegebeanspruchung aufzunehmen. Es ist deshalb bevorzugterweise vorgesehen, den Grundkörper 2 zumindest im Bereich des Linearantriebes 11 mit einer Querverrippung auszurüsten. Diese ist mit dem Grundkörper 2 bevorzugterweise verschraubt.

**Bezugszeichenliste**

| | | | |
|---|---|---|---|
| 1 | Schweißeinrichtung | 18 | Regelungseinrichtung |
| 2 | Grundkörper | 19 | Messeinrichtung |
| 3 | Elektrodenhalter | 20 | Vergleichsschaltung |
| 4 | Schweißelektrode | 21 | kommunikationstechnische Verbindung |
| 5 | Elektrodenhalter | 22 | kommunikationstechnische Verbindung |
| 6 | Schweißelektrode | 23 | Wegsensor |
| 7 | Schließrichtung | 24 | kommunikationstechnische Verbindung |
| 8 | Transformator | | |
| 9 | Stromleitung | | |
| 10 | Bauteile | | |
| 11 | Linearantrieb | | |
| 12 | Spulenanordnung | | |
| 13 | Spulenanordnung | | |
| 14 | Anker | | |
| 15 | Schaltmittel | | |
| 16 | Schalter | | |
| 17 | Sensor | | |

## Patentansprüche

1. Widerstandsbuckelschweißeinrichtung zum Widerstandsbuckelschweißen, mit zwei Elektrodenhaltern (3, 4), die jeweils der Aufnahme einer mit einem elektrischen Schweißstrom beaufschlagbaren Schweißelektrode (4, 6) dienen, wobei einer der beiden Elektrodenhalter (5) linear verfahrbar ausgebildet und unter Kraftbeaufschlagung von zwischen den Schweißelektroden (4, 6) angeordneten und zu verschweißenden Bauteilen (10) mit einer in Schließrichtung (7) wirkenden Kraft beaufschlagbar ist, **dadurch gekennzeichnet, dass** zur Verfahrbewegung sowie zur Kraftbeaufschlagung des einen Elektrodenhalters (5) ausschließlich ein Linearantrieb (11) vorgesehen ist, wobei der Linearantrieb (11) ein magnetischer Linearantrieb ist, der kraftgesteuert ist, wobei als Maß für die auf die zu verschweißenden Bauteile (10) einwirkende Kraftbeaufschlagung der am Linearantrieb (11) anliegende und hinsichtlich Stromstärke und/oder Spannung vorgebbare Strom dient, wobei im Falle einer Unterschreitung der vorgebbaren Stromstärke und/oder Spannung eine Stromzuschaltung zur Erzielung einer vorgebbaren Schweißkraft erfolgt, wobei der Linearantrieb (11) einen verfahrbar zwischen zwei Spulenanordnungen (12, 13) angeordneten plattenförmig ausgebildeten Anker (14) aufweist.

2. Widerstandsbuckelschweißeinrichtung nach Anspruch 1, **dadurch gekennzeichnet, dass** der Linearantrieb (11) mittels einer Regelungseinrichtung (18) weggesteuert ist, wobei die Regelungseinrichtung (18) mit einer Messeinrichtung (19) den Verfahrweg des linear verfahrbar ausgebildeten Elektrodenhalters (5) und/oder des Ankers (14) misst und mit einer Vergleichsschaltung (20) den erfassten Messwert mit einem vorgebbaren Weg-Vergleichswert vergleicht, wobei im Falle der Gleichheit von Messwert und Weg-Vergleichswert die Verfahrbewegung endet.

3. Widerstandsbuckelschweißeinrichtung nach einem der vorhergehenden Ansprüche, **dadurch gekennzeichnet, dass** der Anker (14) eine Kunststoffplatte sowie einen daran angeordneten magnetisch aktiven Teil aus einem dauermagnetischen Werkstoff aufweist.

4. Widerstandsbuckelschweißeinrichtung nach einem der vorhergehenden Ansprüche, **dadurch gekennzeichnet, dass** der Anker (14) ein mit einem Unterbrechungsschalter (16) zusammenwirkendes Schaltmittel (15) aufweist.

5. Widerstandsbuckelschweißeinrichtung nach einem der vorhergehenden Ansprüche, **dadurch gekennzeichnet, dass** der verfahrbar ausgebildete Elektrodenhalter (5) mit einem Kraftsensor (17) und/oder einem Wegsensor (23) ausgerüstet ist.

6. Widerstandsbuckelschweißeinrichtung nach einem der vorhergehenden Ansprüche, **dadurch gekennzeichnet, dass** die Schweißkraft in Abhängigkeit der Buckelgeometrie vorgebbar ist.

7. Widerstandsbuckelschweißeinrichtung nach einem der vorhergehenden Ansprüche, **dadurch gekennzeichnet, dass** eine Auswerteeinheit vorgesehen ist, die die Buckelgeometrie automatisch erfasst.

8. Widerstandsbuckelschweißeinrichtung nach Anspruch 7, **dadurch gekennzeichnet, dass** die Auswerteeinheit eine optische Erfassungseinrichtung aufweist.

9. Widerstandsbuckelschweißverfahren zum Widerstandsbuckelschweißen mittels einer Widerstandsbuckelschweißeinrichtung nach einem der vorhergehenden Ansprüche, wobei der Linearantrieb (11) kraftgesteuert wird, wobei als Maß für die auf die zu verschweißenden Bauteile (10) einwirkende Kraftbeaufschlagung der am Linearantrieb anliegende und hinsichtlich Stromstärke und/oder Spannung vorgebbaren Strom dient, wobei im Falle einer Unterschreitung der vorgebbaren Stromstärke und/oder Spannung eine Stromzuschaltung zur Erzielung einer vorgebbaren Schweißkraft erfolgt.

## Claims

1. Resistance projection welding device for resistance projection welding, comprising two electrode holders (3, 4), each serving to receive a welding electrode (4, 6) to which an electric welding current can be applied, wherein one of the two electrode holders (5) is designed for linear displacement and can be subject to a force acting in a closing direction (7) while a force is applied to components (10) arranged between the welding electrodes (4, 6) and to be welded, **characterized in that** for the displacement movement of and application of force to one electrode holder (5) a linear drive (11) is exclusively provided, said linear drive (11) being a magnetic linear drive that is force-controlled, wherein the current applied to the linear drive (11) and predeterminable in terms of amperage and/or voltage serves as a measure of the force acting on the components (10) to be welded, wherein, if the amperage and/or voltage falls below the predeterminable amperage and/or voltage, a current is connected to achieve a predeterminable welding force, wherein the linear drive (11) has an armature (14) of plate-shaped design which is movably arranged between two coil arrangements (12, 13).

2. Resistance projection welding device according to claim 1, **characterized in that** the linear drive (11) is distance-controlled by means of a regulation system (18), wherein the regulation system (18) measures the travel distance of the electrode holder (5) designed for linear displacement and/or of the armature (14) by means of a measuring device (19) and compares the detected measurement value to a predeterminable reference distance value, wherein the displacement movement ends when the measurement value and the reference distance value are equal.

3. Resistance projection welding device according to any one of the preceding claims, **characterized in that** the armature (14) comprises a plastic plate and a magnetically active part from a permanent-magnetic material.

4. Resistance projection welding device according to any one of the preceding claims, **characterized in that** the armature (14) comprises a switch means (15) that interacts with a circuit breaker (16).

5. Resistance projection welding device according to any one of the preceding claims, **characterized in that** an electrode holder (5) designed for displacement is equipped with a force sensor (17) and/or a displacement sensor.

6. Resistance projection welding device according to any one of the preceding claims, **characterized in that** the welding power is predeterminable as a function of the projection geometry.

7. Resistance projection welding device according to any one of the preceding claims, **characterized in that** an evaluation unit is provided which automatically detects the projection geometry.

8. Resistance projection welding device according claim 7, **characterized in that** the evaluation unit comprises an optical detection device.

9. Resistance projection welding method for resistance projection welding by means of a resistance projection welding device according to any one of the preceding claims, wherein the linear drive (11) is force-controlled, wherein the current applied to the linear drive (11) and predeterminable in terms of amperage and/or voltage serves as a measure of the force acting on the components (10) to be welded, wherein, if the amperage and/or voltage falls below the predeterminable amperage and/or voltage, a current is connected to achieve a predeterminable welding force.

## Revendications

1. Dispositif de soudage destiné au soudage par résistance par bossage, comprenant deux porte-électrodes (3, 4) servant à recevoir chacun une électrode de soudage (4, 6) pouvant être alimentée en courant électrique, l'un des deux porte-électrodes (5) étant conçu pour un déplacement linéaire et pouvant être soumis à une force agissant dans une direction de fermeture (7), tandis qu'une force est appliquée sur des composants (10) à souder disposés entre les électrodes de soudage (4, 6), **caractérisé en ce que** pour le mouvement de déplacement et l'application de la force sur l'un des porte-électrodes (5), il est prévu exclusivement un dispositif d'entraînement linéaire (11), le dispositif d'entraînement linéaire (11) étant un dispositif d'entraînement linéaire magnétique à commande par force, le courant appliqué au dispositif d'entraînement linéaire (11) et pouvant être prédéterminé en termes d'intensité et/ou de tension servant de mesure de la force agissant sur les composants (10) à souder, un courant étant connecté pour obtenir une force de soudage prédéterminée lorsque le courant et/ou la tension tombe en dessous du courant et/ou de la tension pouvant être prédéterminés, le dispositif d'entraînement linéaire (11) présentant une armature (14) en forme de plaque qui est disposée de manière mobile entre deux agencements de bobines (12, 13).

2. Dispositif de soudage au soudage par résistance par bossage selon la revendication 1, **caractérisé en ce que** le dispositif d'entraînement linéaire (11) est commandé en distance au moyen d'un système de régulation (18), le système de régulation (18) mesurant la distance de déplacement du porte-électrode (5) conçu pour le déplacement linéaire et/ou de l'armature (14) au moyen d'un dispositif de mesure (19) et comparant la valeur de mesure détectée à une valeur de distance de référence pouvant être prédéterminée, le mouvement de déplacement s'arrêtant lorsque la valeur de mesure et la valeur de distance de référence sont égales.

3. Dispositif de soudage destiné au soudage par résistance par bossage selon l'une des revendications précédentes, **caractérisé en ce que** l'armature (14) comprend une plaque en matière plastique et une partie magnétiquement active en un matériau à magnétisme permanent.

4. Dispositif de soudage destiné au soudage par résistance par bossage selon l'une des revendications précédentes, **caractérisé en ce que** l'armature (14) comprend un moyen de commutation (15) qui interagit avec un disjoncteur (16).

5. Dispositif de soudage destiné au soudage par résistance par bossage selon l'une des revendications précédentes, **caractérisé en ce qu'**un porte-électrode (5) conçu pour le déplacement est équipé d'un capteur de force (17) et/ou d'un capteur de déplacement.

6. Dispositif de soudage destiné au soudage par résistance par bossage selon l'une des revendications précédentes, **caractérisé en ce que** la puissance de soudage peut être prédéterminée en fonction de la géométrie de bossage.

7. Dispositif de soudage destiné au soudage par résistance par bossage selon l'une des revendications précédentes, **caractérisé en ce qu'**il est prévu une unité d'évaluation qui détecte automatiquement la géométrie de bossage.

8. Dispositif de soudage destiné au soudage par résistance par bossage selon la revendication 7, **caractérisé en ce que** l'unité d'évaluation comprend un dispositif de détection optique.

9. Procédé de soudage par résistance par bossage pour le soudage par résistance par bossage au moyen d'un dispositif de soudage par par résistance par bossage selon l'une quelconque des revendications précédentes, dans lequel le dispositif d'entraînement linéaire (11) est commandé en force, dans lequel le courant appliqué au dispositif d'entraînement linéaire (11) et pouvant être prédéterminé en termes d'intensité et/ou de tension sert de mesure de la force agissant sur les composants (10) à souder, un courant étant connecté pour obtenir une force de soudage prédéterminée lorsque le courant et/ou la tension tombe en dessous du courant et/ou de la tension pouvant être prédéterminés.
